# EUROPEAN PATENT SPECIFICATION

(11) **EP 2 633 939 B1**
(45) Date of publication and mention of the grant of the patent: **15.04.2015**
(21) Application number: 12191248.9
(22) Date of filing: 05.11.2012
(51) Int. Cl.: B23K 9/32, B23K 10/00, B23K 37/02, H05H 1/34

(54) **Portable apparatus, particularly for welding machine and plasma cutting**
Tragbare Vorrichtung, insbesondere für Schweißmaschine und Plasmaschneiden
Appareil portable, en particulier pour machine de soudage et de découpage au plasma

(30) Priority: 02.03.2012 IT PD20120058
(43) Date of publication of application: 04.09.2013
(73) Proprietor: Segala Bruno S.r.l., 36066 Sandrigo (VI) (IT)
(72) Inventor: Segala, Bruno, 36066 SANDRIGO VI (IT)
(74) Representative: Modiano, Micaela Nadia

(56) References cited:
- EP-A2- 1 153 692
- EP-A2- 1 247 609
- WO-A1-2009/078043
- DE-U1-202006 015 816
- US-A1- 2009 057 285
- US-A1- 2009 159 576
- DATABASE WPI Week 201264 18 July 2012 (2012-07-18) Thomson Scientific, London, GB; AN 2012-L54166 XP002687718, -& CN 202 336 654 U 18 July 2012 (2012-07-18)

## Description

The present invention relates to a portable apparatus, particularly for plasma welding or cutting, according to the preamble of claim 1 (see, for example, WO 2009/078 043 A).

Portable welding apparatuses, both for the various principal methods of arc welding (MMA, TIG, MIG/MAG and 'gasless' Mig) and for resistance welding, and also portable apparatuses for plasma cutting, are nowadays increasingly widespread and appreciated for their combination of quality, high functionality, low encumbrances and ease of transport.

Such portable apparatuses generally comprise a box-like body that contains an electronic power board, an optional receptacle for the welding wire, for example for a MIG/MAG welder, and a canister for the shielding gas. A flexible hose extends from such box-like body and terminates in the welding torch, or in the plasma cutting torch.

Such portable apparatuses, although widespread and appreciated, have a major drawback which is linked to the management by the user of the long torch holder hose when the portable apparatus is not in use.

In fact such torch holder hose is usually left placed untidily about the box-like body, or it is partially rolled up around the box-like body as far as the flexibility of the hose permits, but with the result that as soon as the portable apparatus is lifted and moved, the hose unwinds in a disorderly manner, resulting in an encumbrance for the user who has to be careful not to trip over it.

Moreover, the torch holder hose, with the torch, if left outside the box-like body, is exposed to knocks, the accumulation of dust in the event of a long period of inactivity, and the aggression of atmospheric agents if the apparatus is stored in a poorly-protected environment or in the open.

In some recent models, the torch holder hose can be detached and removed from the box-like body, thus necessitating rolling up and stowing in another adapted container, which is different from and supplementary to the box-like body of the apparatus.

Similarly, management of the electric power supply cable of the portable apparatus is also left to the care of the user, who bears the burden of finding an ordered accommodation for such cable in periods when the apparatus is not in use.

The aim of the present invention is to provide a portable apparatus, particularly for plasma welding or cutting, which is capable of overcoming the above-mentioned drawbacks of conventional portable apparatuses for plasma welding or cutting.

Within this aim, an object of the invention is to provide a portable apparatus in which the torch holder hose can be stowed in an ordered manner thus resulting in no encumbrance for the user during transport of the apparatus.

Another object of the invention is to provide a portable apparatus the electric power supply cable of which is easy to manage in an orderly manner.

A further object of the invention is to provide a portable apparatus with performance levels at least as high as those of similar conventional portable apparatuses.

A still further object of the invention is to provide a portable apparatus, particularly for plasma welding or cutting, which can be produced using known systems and technologies.

This aim and these and other objects which will become better evident hereinafter are achieved by a portable apparatus as defined in claim 1.

Further characteristics and advantages of the invention will become better apparent from the description of two preferred, but not exclusive, embodiments of the portable apparatus according to the invention, illustrated by way of non-limiting example in the accompanying drawings wherein:
Figure 1 is a perspective view of a portable welder according to the invention in a first embodiment thereof;
Figure 2 is an additional perspective view of the welder in Figure 1;
Figure 3 is a perspective view of a portable plasma cutting apparatus according to the invention in a second embodiment thereof;
Figure 4 is an additional perspective view of the apparatus in Figure 3.

With reference to the figures, a portable apparatus according to the invention, particularly for welding, is generally designated in the first embodiment thereof with the reference numeral 10.

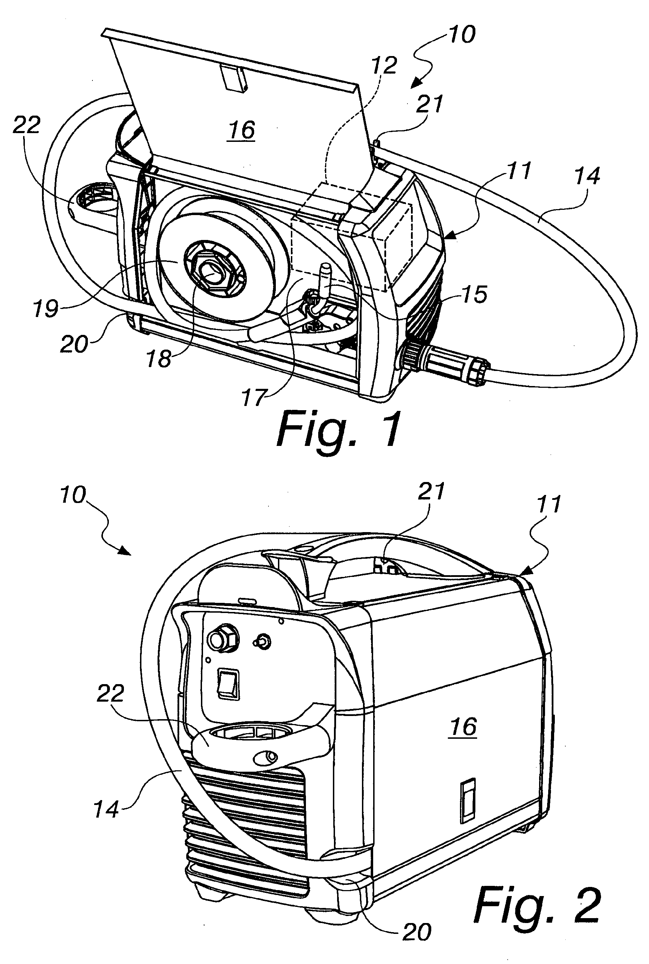

The portable welding apparatus 10 comprises a box-like body 11 which contains an electronic power board 12, which is shown in dotted lines in Figure 1 and should be understood as being of a known type.

From such box-like body 11 a flexible torch holder hose 14 extends which terminates in the welding torch 15.

The particularity of the portable apparatus 10 consists in that the box-like body 11 has a cover 16 for closing an accommodation receptacle 17 for the welding torch 15 and for at least part of the torch holder hose 14.

Figure 1 shows an example of the portable apparatus 10 for wire-type welding, and thus also present in the receptacle 17 there is for example, conveniently pivoted with means of a known type, a pin 18, a spool of wire 19 for welding.

For the passage of the torch holder hose 14 inside the receptacle 17 in the box-like body 11, a recess 20 is formed in the box-like body 11, at the edge of the cover 16.

In a different embodiment of the invention, not shown for the sake of simplicity, the passage of the hose 14 toward the interior of the receptacle 17 is made possible by a recess which is formed in the edge of the cover 16.

The cover 16 is, according to the present invention, hinged along one edge to the rest of the shell that forms the box-like body 11.

So that the section of hose 14 that remains outside the receptacle 17 does not hang down untidily, on the upper part of the box-like body 11 a hose holder fork 21, according to the present invention, is provided to which the hose 14 can be coupled reversibly.

A canister support ring 22 for the canister of shielding gas also extends from the box-like body 11.

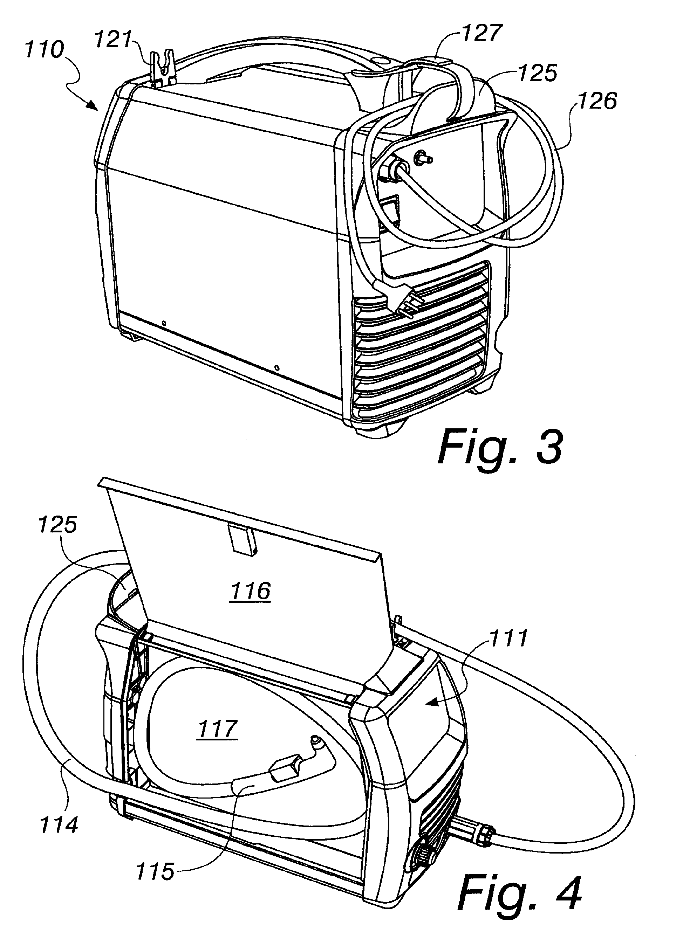

Figures 3 and 4 show an example of a second embodiment of the portable apparatus according to the invention, for plasma cutting, which is designated with the reference numeral 110.

The apparatus 110 has a box-like body 111, with a cover 116 which is pivoted in the manner of a door leaf, and a receptacle 117 which is free from the spool of wire, and thus able to contain one or more windings of hose 114 with a torch 115 for plasma cutting.

In Figure 3 the hose holder fork 121 is clearly visible.

In such second embodiment the presence of an upper shoulder 125 is clearly shown that is adapted for winding the electric power supply cable 126.

With the aid of a band which can be opened and closed 127, for example a Velcro® ribbon, the supply cable 126 can easily be collected in an orderly manner on the upper shoulder 125, making it even simpler to manage and transport the portable apparatus according to the invention.

In practice it has been found that the invention fully achieves the intended aim and objects.

In particular, with the invention a portable apparatus, particularly for plasma welding or cutting, is made available in which the torch holder hose is stowed in an orderly manner thus resulting in no encumbrance for the user when the apparatus is not in use and being transported.

Moreover, with the invention a portable apparatus is made available in which the electric power supply cable is also easy to manage in an orderly manner.

Moreover, with the invention a portable apparatus is made available with performance levels at least as high as those of similar conventional portable apparatuses, the internal parts being understood to be be of known type.

In addition, with the invention a portable apparatus is made available which can be produced using known systems and technologies.

The invention thus conceived is susceptible of numerous modifications and variations, all of which are within the scope of the appended claims. Moreover, all the details may be substituted by other, technically equivalent elements.

In practice the materials employed, as well as the contingent dimensions and shapes, may be any according to requirements and to the state of the art.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A portable apparatus (10), particularly for plasma welding or cutting, comprising a box-like body (11, 111) formed by a shell which contains an electronic power board (12), a torch (15, 115) a flexible torch holder hose (14 114) extending from said box-like body (11, 111) and terminating in the torch (15, 115), for plasma welding or cutting, and an accommodation receptacle (17, 117) for said torch (15, 115) and for at least part of said torch holder hose (14, 114) which is closed by a corresponding cover (16, 116), **characterized in that** said cover (16, 116) is hinged along one edge thereof to a side face of the rest of the shell that forms said box-like body (11, 111), so that said accommodation receptacle (17, 117) is accessible, upon opening of said cover (16, 116), from said side face of the box-like body (11, 111), **in that** a hose holder fork (21, 121) is further provided on the upper part of said box-like body (11, 111) to which the torch holder hose (14, 114) can be coupled reversibly.

2. The portable apparatus according to claim 1, **characterized in that** the apparatus comprises a spool of welding wire (19), present in said receptacle (17).

3. The portable apparatus according to claim 1, **characterized in that** it has, for the passage of the torch holder hose (14) inside the receptacle (17) in the box-like body (11), a recess (20) which is formed in said box-like body (11), at the edge of the cover (16).

4. The portable apparatus according to claim 1, **characterized in that** it has a canister support ring (22) for a canister of shielding gas also extends from the box-like body (11).

5. The portable apparatus according to claim 1, **characterized in that** it has an upper shoulder (125) that is adapted for winding the electric power supply cable (126).

6. The portable apparatus according to claims 1 or 5, **characterized in that** said cover (116) is pivoted in the manner of a door leaf to said box-like body (111), said receptacle (117) being free from welding wire spool whereby to contain one or more windings of the torch holder hose (114) and the torch (115) for plasma cutting.

## Patentansprüche

1. Eine tragbare Vorrichtung (10), insbesondere für Plasmaschweißen oder -schneiden, die einen kastenartigen Körper (11, 111) umfasst, geformt aus einem Gehäuse, das eine elektronische Kraftschalttafel (12) umfasst, einen Schweißbrenner (15, 115), einen biegsamen Schweißbrennerhalterschlauch (14, 114), der sich von dem kastenartigen Körper (11, 111) erstreckt und in dem Schweißbrenner (15, 115) zum Plasmaschweißen oder -schneiden endet, und ein Aufnahmefach (17, 117) für den Schweißbrenner (15, 115) und für mindestens einen Teil des Schweißbrennerhalterschlauchs (14, 114), das mit einem entsprechenden Deckel (16, 116) verschlossen wird, **dadurch gekennzeichnet, dass** der Deckel (16, 116) entlang einer Kante desselben gelenkig mit einer Seitenfläche des Rests des Gehäuses verbunden ist, das den kastenartigen Körper (11, 111) bildet, so dass das Aufnahmefach (17, 117) nach dem Öffnen des Deckels (16, 116) von der Seitenfläche des kastenartigen Körpers (11, 111) her zugänglich ist, dass weiter eine Schlauchhaltergabel (21, 121) am oberen Teil des kastenartigen Körpers (11, 111) angebracht ist, mit welcher der Schweißbrennerhalterschlauch (14, 114) reversibel gekoppelt werden kann.

2. Die tragbare Vorrichtung gemäß Anspruch 1, **dadurch gekennzeichnet, dass** die Vorrichtung eine Spule Schweißdraht (19) umfasst, vorhanden in dem Fach (17).

3. Die tragbare Vorrichtung gemäß Anspruch 1, **dadurch gekennzeichnet, dass** sie für die Passage des Schweißbrennerhalteschlauchs (14) im Fach (17) im kastenartigen Körper (11) einen Hohlraum (20) hat, der in dem kastenartigen Körper (11), an der Kante des Deckels (16), geformt ist.

4. Die tragbare Vorrichtung gemäß Anspruch 1, **dadurch gekennzeichnet, dass** sie einen Kanister-Tragring (22) für einen Kanister von Schutzgas hat, der sich ebenfalls vom kastenartigen Körper (11) erstreckt.

5. Die tragbare Vorrichtung gemäß Anspruch 1, **dadurch gekennzeichnet, dass** sie eine obere Schulter (125) hat, die zum Aufwickeln des elektrischen Stromversorgungskabels (126) geeignet ist.

6. Die tragbare Vorrichtung gemäß Anspruch 1 oder 5, **dadurch gekennzeichnet, dass** der Deckel (116) in der Art eines Türblatts gelenkig mit dem kastenartigen Körper (111) verbunden ist, wobei das Fach (117) frei von der Schweißdrahtspule ist, um dadurch eine oder mehrere Wicklungen des Schweißbrennerhalterschlauchs (114) und den Schweißbrenner (115) zum Plasma-Schmelzschneiden aufzunehmen.

## Revendications

1. Appareil portable (10) destiné en particulier au soudage ou découpage plasma comprenant un corps en forme de boîtier (11, 111) formé par une coque qui contient un circuit électronique de puissance (12), une torche (15, 115) un flexible porte-torche (14, 114) s'étendant depuis ledit corps en forme de boîtier (11, 111) jusque dans la torche de soudage ou découpage plasma (15, 115) et un récipient de logement (17, 117) pour ladite torche (15, 115) et au moins une partie dudit flexible porte-torche (14, 114) qui est fermé par un couvercle correspondant (16, 116), **caractérisé en ce que** ledit couvercle (16, 116) est articulé le long d'une de ses arêtes jusqu'à une face latérale du reste de la coque qui forme ledit corps en forme de boîtier (11, 111), de façon que ledit récipient de logement (17, 117) est accessible après ouverture dudit couvercle (16, 116) depuis ladite face latérale du corps en forme de boîtier (11, 111), **en ce qu'**une attache de flexible de type fourche (21, 121) est prévue, en outre, sur la partie supérieure dudit corps en forme de boîtier (11, 111), attache, à laquelle le flexible porte-torche (14, 114) peut être couplé de façon réversible.

2. Appareil portable suivant la revendication 1, **caractérisé en ce que** l'appareil comprend une bobine de fil de soudage (19) présente dans ledit récipient (17).

3. Appareil portable suivant la revendication 1, **caractérisé en ce qu'**il présente une cavité (20) pour le passage du flexible porte-torche (14) à l'intérieur du récipient (17) dans le corps en forme de boîtier (11), cavité, qui est formée dans ledit corps en forme de boîtier (11) au niveau de l'arête du couvercle (16).

4. Appareil portable suivant la revendication 1, **caractérisé en ce qu'**il présente un anneau porte-réservoir (22) pour un réservoir de gaz de protection qui s'étend également depuis le corps en forme de boîtier (11).

5. Appareil portable suivant la revendication 1, **caractérisé en ce qu'**il présente une épaule supérieure (125) qui est adaptée à l'enroulement du câble d'alimentation électrique (126).

6. Appareil portable suivant les revendications 1 ou 5, **caractérisé en ce que** ledit couvercle (116) est pivoté envers ledit corps en forme de boîtier (111) à la manière d'un vantail, ledit récipient (117) étant libre de bobine de fil de soudage en prévision de ce qu'il contient un ou plusieurs enroulements du flexible porte-torche (114) et la torche (115) pour le découpage plasma.
